# EUROPÄISCHE PATENTSCHRIFT

(11) **EP 0 681 399 B1**
(45) Veröffentlichungstag und Bekanntmachung des Hinweises auf die Patenterteilung: **07.06.2000**
(21) Anmeldenummer: 95106575.4
(22) Anmeldetag: 27.04.1995
(51) Int. Cl.: H04N 7/00, H04N 5/21

(54) **Verfahren zur Dekodierung eines Farbfernsehsignals**
Method for decoding a colour television signal
Procédé de décodage d'un signal de télévision couleur

(30) Priorität: 06.05.1994 DE 4415981
(43) Veröffentlichungstag der Anmeldung: 08.11.1995
(73) Patentinhaber: DEUTSCHE THOMSON-BRANDT GMBH, 78048 Villingen-Schwenningen (DE)
(72) Erfinder: Kluth, Hans-Jürgen, D-78052 Villingen-Schwenningen (DE); Hütter, Ingo, D-29223 Celle (DE)

(56) Entgegenhaltungen:
- EP-A- 0 587 224
- WO-A-90/09081
- GB-A- 2 264 418
- US-A- 5 067 018
- PATENT ABSTRACTS OF JAPAN vol. 17 no. 50 (E-1314) ,29.Januar 1993 & JP-A-04 262692 (SHARP CORP.) 18.September 1992,

## Beschreibung

Die Erfindung betrifft die Dekodierung eines PALplus-Farbfernsehsignals.

Bei PALplus werden während 432 Zeilen die Videosignale für ein 16:9-Bild übertragen. Diese Signale dienen in einem normalen Fernsehempfänger mit 4:3-Bildwiedergabe zur Darstellung des Bildes, wobei am oberen und unteren Bildrand je ein schwarzer Balken mit je 72 Zeilen verbleibt. Während dieser Zeilen wird ein sogenanntes Helpersignal übertragen, das bei der 16:9-Bildwiedergabe in einem Empfänger mit einem Bildschirm mit 16:9-Format zur Regenerierung der vertikalen Auflösung des Gesamtbildes dient. Dieses Helpersignal wird durch Amplitudenmodulation des Farbträgers mit verringerter Amplitude in der Phasenlage der U-Achse übertragen. Damit die verringerte Amplitude des Helpersignals nicht zu einem verstärkten Rauschen im Empfänger führt, wird das Helpersignal vor der Modulation kompandiert.
Wenn das eingehende Fernsehsignal gestört ist, also der sogenannte S/N-Geräuschabstandsfaktor klein ist, kommt es zu unangenehmen, sichtbaren Störungen im Bild.

GB-A-2 264 418 zeigt einen Fernseh-Empfänger für NTSC-Signale mit Helpersignalen, bei dem die Helpersignale rauschamplituden-abhängig abgeschwächt werden.

Der Erfindung liegt die Aufgabe zugrunde, eine PALplus-Dekodierung anzugeben, die bei verrauschtem Eingangssignal eine verbesserte Bildqualität liefert.
Diese Aufgabe wird durch die in Anspruch 1 angegebene Erfindung gelöst. Weiterbildungen der Erfindung sind in den abhängigen Ansprüchen angegeben.

Der Erfindung liegt die Erkenntnis zugrunde, daß unterhalb eines gewissen S/N-Geräuschabstandsfaktors bei PALplus-Betrieb das Bild subjektiv angenehmer ist, wenn die Helpersignale reduziert dargestellt werden. Der Farbfernsehempfänger ist deshalb mit einer Meßeinrichtung ausgestattet, mit dem der S/N-Geräuschabstandsfaktor bestimmt wird. Der S/N-Geräuschabstandsfaktor kann beispielsweise im Videosignal oder direkt im Helpersignal ausgewertet werden. Bei einem kleinen S/N-Geräuschabstandsfaktor erzeugt die Meßeinrichtung ein Steuersignal, mit dem ein für die Dekodierung des Helpersignals zuständiger Prozessor in Abhängigkeit des S/N-Geräuschabstandsfaktors gesteuert wird.

Die Statistik des Helpersignals ist derart, daß es überwiegend niederfrequente Signalanteile enthält. Das starke zusätzliche Rauschen im Helpersignal erstreckt sich dagegen über die gesamte Bandbreite des Helpersignals. Durch eine Tiefpaßfilterung des Helpersignals kann dessen Bandbreite von ca. 3 MHz auf z.B. 1 MHz oder 500 kHz reduziert werden. Bei der anschließenden Rückkonversion des PALplus-Signales auf 576 Zeilen kann deshalb die durch den Helper zugeführte Rauschleistung auf 1/3 bzw. 1/6 der Rauschleistung ohne Tiefpaßfilterung reduziert werden. Dies hat den Vorteil, daß es den Bereich des Helpersignals mit dem größten Signalanteil noch ausnutzt und somit beispielsweise zu einer deutlich besseren vertikalen Schärfe führt, als bei der Konversion ohne Helper.

Bei einem sehr geringen Störabstand des Helpersignals ist es vorteilhaft, den Helperprozessor ganz abzuschalten. Dann wird zwar die Vertikalauflösung im Bild verringert, das Bild als solches wirkt jedoch subjektiv angenehmer als mit gestörtem Helpersignal.

Die Übertragung der PALplus-Fernsehsignale erfolgt auf verschiedenen Wegen: Geplant sind terrestrische Übertragungen sowie Übertragungen per Satellit und Kabel. Die Satellitenübertragung unterscheidet sich von den beiden anderen darin, daß die Rauschleistung mit steigender Frequenz des Videosignals monoton anwächst. Bei gleichem S/N enthält somit das Satellitensignal im Frequenzbereich um den Farbträger herum eine größere Rauschleistung, welche zu einer stärkeren Verschlechterung des decodierten Bildes führt als bei einer vergleichbaren terrestrischen Übertragung. Aus diesem Grund ist es sinnvoll, nur in dem Frequenzbereich des Videosignals um 4,43 MHz das Rauschen zu messen, in dem das Helpersignal übertragen wird. Dies kann durch Vorschalten eines Hochpaßfilters vor die Meßeinrichtung erreicht werden.

Weiterhin wird eine Schaltung zur Auswertung des Störabstandes im Helpersignal angegeben, die eine Steuerspannung erzeugt für die Dekodierung des Helpersignals in einem Prozessor.

Bei der Schaltung wird das Farbsynchronsignal, also der sogenannte alternierende PAL-Burst, an den Eingang eines Kammfilters mit einem Verzögerungsglied für zwei Zeilen, einer Addierstufe und einer Subtrahierstufe angelegt. Die Ausgänge dieser Stufen sind an die Eingänge eines Amplitudenkomparators angeschlossen, der eine Schaltungspannung zum Ein- oder Ausschalten des Helperprozessors liefert.

Bei der Schaltung wird die Tatsache vorteilhaft ausgenutzt, daß die Helpersignale auf den Farbträger mit der Original PAL Farbträgerfrequenz aufmoduliert sind. Wenn somit das Helpersignal stark gestört ist, ist zwangsläufig auch das Farbsynchronsignal, das bekanntlich die Farbträgerfrequenz hat, ebenso gestört. Deshalb kann aus dem normalen Farbsynchronsignal eine zuverlässige Schaltspannung für das Ein- und Ausschalten des Helperprozessors abgeleitet werden. Das Kammfilter liefert an seinen beiden Ausgängen getrennte Signale für die Nutzamplitude und für die Störamplitude. Dadurch ist es möglich, diese beiden Signale in dem Komparator zu vergleichen und dadurch einen echten Wert für den Störabstand, also das Verhältnis der Amplituden von Nutzsignal und Störsignal abzuleiten.

Zwischen den Ausgängen der Addierstufe und der Subtrahierstufe und den Eingängen des Komparators sind auf die Farbträgerfrequenz abgestimmte Bandpässe angeordnet. Durch diese Bandpässe werden Störungen außerhalb des Frequenzbereiches des Farbträgers oder Farbsynchronsignals, die die Auswertung beeinflussen können, unterdrückt. Der Komparator enthält eine Schwellwertstufe, die bei einem definierten Amplitudenverhältnis der zugeführten Spannungen eine den Prozessor abschaltende Schaltspannung abgibt. Diese Schwellwertstufe ermöglicht eine genaue Einstellung der Empfindlichkeit des Komparators in dem Sinne, daß die Abschaltung des Helperprozessors bei gestörtem Helpersignal bei dem Wert erfolgt, bei dem das Bild durch die gestörten Helpersignale subjektiv unangenehm wird.

Das Verzögerungsglied besteht vorzugsweise aus der Reihenschaltung von zwei Zeilenverzögerungsleitungen. Derartige Leitungen für die Verzögerung einer Zeile sind im allgemeinen verfügbar. Durch diese Reihenschaltung ist es auch möglich, zusätzlich die Farbsynchronsignale von zwei zeitlich aufeinanderfolgenden Zeilen zu addieren und dadurch ein in der Amplitude erhöhtes Farbsynchronsignal konstanter Phase für eine PLL-Schaltung zur Regenerierung des Farbträgers für die Demodulation des empfangenen Farbträgers oder des mit dem Helpersignal modulierten Farbträgers zu gewinnen.

Bei einer Ausführungsform der Schaltung sind Eingang und Ausgang einer Verzögerungsleitung an die Eingänge einer zweiten Addierstufe angeschlossen, deren Ausgang an den Eingang einer PLL-Schaltung zur Regenerierung des Farbträgers angeschlossen ist. Bei dieser Lösung wird also eine der Verzögerungsleitungen, die an sich für die Auswertung des Geräuschabstandes des Helpersignals dienen, zusätzlich für die Erzeugung eines in der Amplitude erhöhten und von der Phasenumschaltung befreiten Farbsynchronsignals für eine PLL-Schaltung ausgenutzt. Bei dieser Schaltung kann der Ausgang der ersten Addierstufe über einen zeilenfrequent umgeschalteten ±45° Phasendreher an den Eingang einer dritten Addierstufe angeschlossen sein, deren zweiter Eingang an den Ausgang der zweiten Addierstufe und deren Ausgang an den Eingang der PLL-Schaltung angeschlossen ist. Durch diese Lösung werden die Amplitude des der PLL-Schaltung zugeführten Farbsynchronsignals und damit der Störabstand weiter erhöht. Dabei kann zusätzlich der Ausgang der dritten Addierstufe an einen Eingang des Amplitudenkomparators angeschlossen sein. Dadurch wird die Amplitude der das Nutzsignal darstellenden Spannung am Eingang des Amplitudenkomparators erhöht und eine feinere Schwellwerteinstellung ermöglicht.

Gemäß einer Weiterbildung der Erfindung ist eine Schaltung zur vertikalen Aperturkorrektur vorgesehen, die durch die Schaltspannung bei abgeschaltetem Helperprozessor eingeschaltet wird. Dadurch kann die durch die Abschaltung des Helperprozessors an sich auftretende Verringerung der Vertikalauflösung teilweise wieder kompensiert werden. Als Verzögerungsglieder werden vorzugsweise Glasverzögerungsleitungen verwendet. Derartige Leitungen haben eine Bandpaßcharakteristik, durch die Störspannungen außerhalb des Frequenzbereichs des Farbträgers unterdrückt werden. Derartige Leitungen sind außerdem preiswert verfügbar und erzeugen auch keine Störungen durch Taktspannungen wie bei elektronisch getakteten Speichern.

Bei einer anderen Weiterbildung der Schaltung wird bei einem bestimmten Schwellwert im Signal/Störabstand der Helperprozessor nicht vollständig abgeschaltet, sondern nur die Breite des Helpersignals verringert, z.B. von 3 MHz auf 1,5 MHz. Diese Umschaltung auf eine verringerte Bandbreite des Helpersignals erfolgt dabei bei einem Schwellwert, bei dem der Helperprozessor noch nicht abgeschaltet wird, jedoch bei voller Bandbreite schon eine sichtbare Beeinträchtigung des Bildes auftritt.

Wie bereits beschrieben, sollte bei dem Empfang eines verrauschten PALplus Signals unterhalb eines bestimmten S/N von voller Helperdekodierung auf eingeschränkte oder überhauptkeine Helperdecodierung umgeschaltet werden. Bei welchem Wert tatsächlich umgeschaltet wird, hängt dabei nicht nur vom (persönlichen) Geschmack des Entwicklers ab, sondern auch von dem Verfahren, auf das umgeschaltet werden soll. Von der Größenordnung her liegt dieser Umschaltpunkt bei einem S/N von ca. 30 dB.

Wird der Empfänger gerade in einem Empfangsbereich betrieben, der an der Umschaltgrenze liegt, würde die Definition eines festen Umschaltpunktes auf der S/N Achse zu einem häufigen Umschalten zwischen den verschiedenen Modi führen und somit einen "Flattereffekt" hervorrufen. Diesem Effekt kann durch Einführung einer Hysterese begegnet werden. Wenn als Umschaltpunkt z.B. 30 dB festgelegt worden sind und der Hysteresebereich 4 dB betragen soll, so dürfte das Umschalten von Helperverarbeitung auf eingeschränkte Helperverarbeitung nur beim Anwachsen des Rauschens von einem Wert größer als 28 dB auf einen Wert kleiner 28 dB. erfolgen. Umgekehrt erfolgt dann das Zurückschalten auf volle Helperverarbeitung beim Übergang des Rauschens von einem Wert kleiner als 32 dB auf einen Wert größer als 32 dB.

Ein Ausführungsbeispiel der Erfindung wird im folgenden anhand der Zeichnung erläutert. Darin zeigen
- Fig. 1: ein Blockschaltbild einer erfindungsgemäßen Schaltung,
- Fig. 2: eine Weiterbildung der Schaltungen nach Fig. 1 und
- Fig. 3: eine Blockschaltbild für eine Weiterbildung der Erfindung.

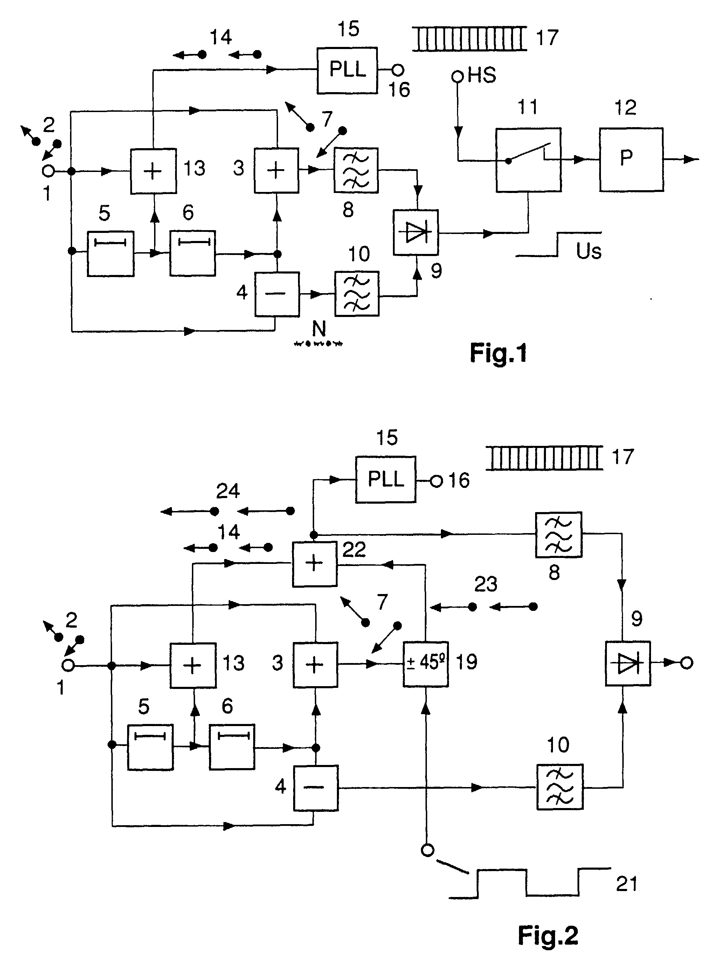

In Fig. 1 steht an der Klemme 1 das vom FBAS-Signal abgetrennte, in der Phase von Zeile zu Zeile umgeschaltete PAL-Farbsynchronsignal 2. Das Farbsynchronsignal 2 gelangt einmal unverzögert an die Eingänge der Addierstufe 3 und der Subtrahierstufe 4 und außerdem über die beiden Verzögerungsleitungen 5, 6 für je eine Zeilendauer an die anderen Eingänge dieser beiden Stufen. In der Addierstufe 3 werden Farbsynchronsignale gleicher Phase, z.B. aus den Zeilen 1 und 3, 3 und 5 usw. addiert, wodurch ein alternierendes Farbsynchronsignal 7 mit doppelter Amplitude entsteht. Dieses Farbsynchronsignal stellt die Amplitude des Nutzsignals und damit auch des mit dem Helpersignal modulierten Farbträgers dar. Das Farbsynchronsignal 7 gelangt über den auf die Farbträgerfrequenz abgestimmten Bandpaß 8 auf den Amplitudenkomparator 9.

In der Subtrahierstufe 4 werden Farbsynchronsignale 2 z.B. aus den Zeilen 1 und 3, 3 und 5. usw. gleicher Phase subtrahiert, so daß am Ausgang der Stufe 4 an sich kein Signal entsteht. Das Signal am Ausgang der Stufe 4 ist daher ein Maß für das jeweilige Störsignal z.B. in Form von Rauschen N. Das Signal N gelangt über den ebenfalls auf die Farbträgerfrequenz abgestimmten Bandpaß 10 auf den zweiten Eingang des Amplitudenkomparators 9. In dem Komparator 9 wird das Amplitudenverhältnis zwischen dem Farbsynchronsignal 7 und dem Rauschsignal N gebildet. Der daraus gewonnene Wert wird einer Schwellwertstufe zugeführt. Wenn das Amplitudenverhältnis S/N (signal to noise) einen definierten Wert unterschreitet, entsteht am Ausgang des Komparators 9 eine Schaltspannung Us. Diese öffnet den Schalter 11, der im Weg des Helpersignals HS zu dem Helperprozessor 12 liegt. Die Auswertung des Helpersignals wird dadurch bei einem zu geringen Störabstand abgeschaltet. Die wechselnde Phase des Farbsynchronsignals 7 am Eingang des Amplitudenkomparators 9 hat dabei keine Bedeutung, weil in dem Komparator 9 nur die Hüllkurve des Farbsynchronsignals ausgewertet wird.

In der Addierstufe 13 werden Farbsynchronsignale 2 aus zwei aufeinanderfolgenden Zeilen mit entgegengesetzter Schaltphase addiert. Dadurch entsteht nach dem Prinzip des PAL-Laufzeitdekoders ein Farbsynchronsignal 14 mit der konstanten Phase der U-Achse. Dieses gelangt als synchronisierendes Signal auf die PLL-Schaltung 15, die an der Klemme 16 den kontinuierlichen unmodulierten Farbträger 17 erzeugt. Dieser dient im Empfänger zur Demodulation des empfangenen Farbträgers oder auch des mit dem Helpersignal mit unterdrücktem Träger modulierten Farbträgers. Vorteilhaft dabei ist, daß das Farbsynchronsignal 14 am Eingang der PLL-Schaltung 15 eine konstante Phase und eine gegenüber dem empfangenen Farbsynchronsignal 2 erhöhte Amplitude aufweist.

Fig. 2 zeigt wieder die Schaltung nach Fig. 1 mit folgender Ergänzung: Das Farbsynchronsignal 7 am Ausgang der Addierstufe 3 mit doppelter Amplitude und von Zeile zu Zeile umgeschalteter Phase wird über den Phasendreher 19, dessen Phasendrehung durch den halbzeilenfrequenten Schaltmäander 21 von Zeile zu Zeile zwischen +45° und -45° umgeschaltet ist, der Addierstufe 22 zugeführt, die außerdem das Farbsynchronsignal 14 konstanter Phase von der Addierstufe 13 empfängt. Die auf gleiche Phase gebrachten Farbsynchronsignale 14 und 23 werden in der Addierstufe 22 addiert. Das Ergebnis ist ein Farbsynchronsignal 24 konstanter Phase und doppelter Amplitude. Dieses wird der PLL-Schaltung 15 zugeführt, die wieder an der Klemme 16 den Farbträger 17 erzeugt. Diese Schaltung hat den Vorteil, daß das Farbsynchronsignal am Synchronisiereingang der PLL-Schaltung 15 gegenüber Fig. 1 eine erhöhte Amplitude aufweist und dadurch der Störabstand in der Synchronisierung verbessert wird.

Das Farbsynchronsignal 24 wird außerdem als Nutzsignal dem Bandpaß 8 zugeführt. Ansonsten arbeitet die Schaltung 8, 9, 10 wie in Fig. 1.

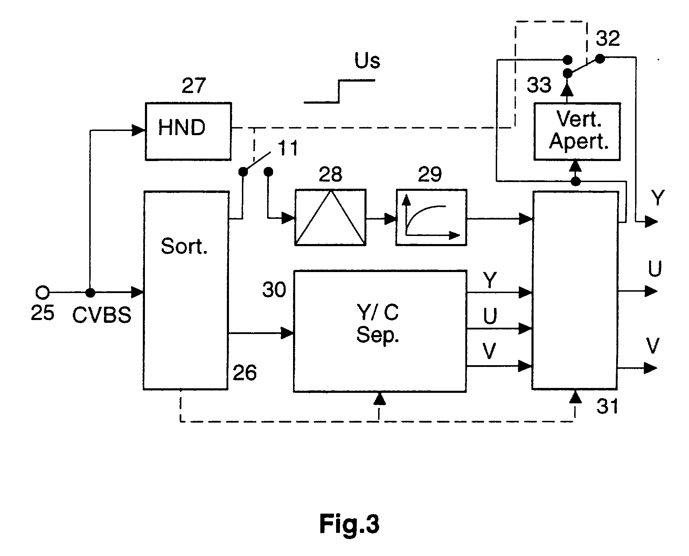

Fig. 3 zeigt das Blockschaltbild eines PAL-plus Dekoders. An der Klemme 25 steht das CVBS oder FBAS-Signal. Dargestellt sind ein Signalsortierer 26, ein Helpersignal-Detektor 27, ein Helper-Demodulator 28, ein Entzerrer 29, eine Trennschaltung 30 zur Trennung von Leuchtdichtesignal Y und Farbsignalen U, V, und ein Letterbox-Prozessor 31. In den Helpersignalweg ist der Schalter 11 eingefügt, der wie in Fig. 1 bei zu stark gestörtem Helpersignal durch die Schaltspannung Us geöffnet wird. Der Schaltung 31 ist eine bekannte Schaltung 33 zur vertikalen Aperturkorrektur zugeordnet. Bei einwandfreiem, also nicht oder wenig gestörtem Helpersignal ist der Schalter 32 durch die Schaltspannung Us in die obere Stellung umgelegt, so daß das Leuchtdichtesignal Y durch die Schaltung 33 nicht beeinflußt wird. Bei zu stark gestörtem Helpersignal ist der Schalter 32 durch die Stellgröße Us in die untere Stellung umgelegt. Dadurch ist die Schaltung 33 in den Weg des Leuchtdichtesignals Y eingeschaltet und dient dazu, die durch den Wegfall des Signals der Helperzeilen an sich bedingte Bildverschlechterung in Vertikalrichtung teilweise wieder zu verringern.

## Patentansprüche

1. Verfahren zur Dekodierung (26, 30, 31) eines Farbfernsehsignals (CVBS) mit einem Helpersignal zum Erhöhen der vertikalen Auflösung, bei dem in Abhängigkeit von einem Störabstand (9; 27) nur ein entsprechender Anteil (11; 31) des decodierten (28, 29) Helpersignals zur Auflösungs-Erhöhung dient, **dadurch gekennzeichnet**, daß:
- das Farbfernsehsignal ein PALplus-Farbfernsehsignal ist;
- das aus dem Farbfernsehsignal gewonnene Farb-Synchronsignal (2) über ein Kammfilter mit einem Zwei-Zeilen-Verzögerungsglied (5, 6) geleitet wird, wobei die Amplitude des Störsignals (N) aus der Differenz (4) zwischen dem Eingangs- und dem Ausgangssignal des Zwei-Zeilen-Verzögerungsglieds ermittelt wird und die Amplitude des Bezugs-Signals (7) aus der Summe (3) von Eingangs- und Ausgangssignal des Zwei-Zeilen-Verzögerungsglieds ermittelt wird;
- durch Vergleich der Amplitude des Störsignals und der Amplitude des Bezugs-Signals ein Steuersignal (Us) zum Auswählen des Anteils des zu decodierenden Helpersignals gewonnen wird.

2. Verfahren nach Anspruch 1, bei dem das Summensignal (3) von Eingangs- und Ausgangssignal des Zwei-Zeilen-Verzögerungsglieds (5, 6) zeilenfrequent um ±45° in der Phase geschaltet (19) zu dem Summensignal (13) von Eingangs- und Mittelabgriffs-Signal des Zwei-Zeilen-Verzögerungsglieds addiert (22) wird und so das Bezugs-Signal bildet.

3. Verfahren nach Anspruch 1 oder 2, bei dem das decodierte Helpersignal in Abhängigkeit von dem Steuersignal (Us) tiefpassgefiltert wird, um dessen Bandbreite einzuschränken.

4. Verfahren nach einem der Ansprüche 1 bis 3, wobei das Störsignal und das Bezugs-Signal vor dem Vergleich (9) ihrer Amplituden über auf die Farbträger-Frequenz abgestimmte Bandpässe (8, 10) geleitet werden.

5. Verfahren nach einem der Ansprüche 1, 3 oder 4, wobei eine PLL-Schaltung (15) zur Regenerierung des Farbträgers (17) von dem Summen-Signal (13) von Eingangs- und Mittelabgriffs-Signal des Zwei-Zeilen-Verzögerungsglieds angesteuert wird.

6. Verfahren nach einem der Ansprüche 1 bis 5, bei dem das Zwei-Zeilen-Verzögerungsglied aus der Reihenschaltung von zwei Zeilenverzögerungs-Leitungen (5, 6) besteht.

7. Verfahren nach einem der Ansprüche 1 bis 6, bei dem, wenn kein Anteil des decodierten Helpersignals zur Auflösungs-Erhöhung dient, mittels des Steuersignals (Us) eine vertikale Apertur-Korrektur (33) eingeschaltet wird.

8. Verfahren nach einem der Ansprüche 1 bis 7, wobei das Steuersignal (Us) eine Hysterese-Funktion beinhaltet.

## Claims

1. Method for decoding (26, 30, 31) a colour television signal (CVBS) with a helper signal for increasing the vertical resolution, in which, in dependence on a signal-to-noise ratio (9; 27), only a corresponding component (11; 31) of the decoded (28, 29) helper signal serves for increasing the resolution,
**characterized** in that:
- the colour television signal is a PALplus colour television signal;
- the colour synchronizing signal (2) obtained from the colour television signal is conducted via a comb filter with a two-line delay element (5, 6), the amplitude of the noise signal (N) being determined from the difference (4) between the input signal and the output signal of the two-line delay element and the amplitude of the reference signal (7) being determined from the sum (3) of the input and output signals of the two-line delay element;
- a control signal (Us) for the selection of the component of the helper signal to be decoded is obtained by comparison of the amplitude of the noise signal and the amplitude of the reference signal.

2. Method according to Claim 1, in which the summation signal (3) of the input and output signals of the two-line delay element (5, 6) is added (22), having been switched (19) at the line frequency by ± 45° in its phase, to the summation signal (13) of the input signal and centre tap signal of the two-line delay element, and thus forms the reference signal.

3. Method according to Claim 1 or 2, in which the decoder helper signal is subjected to low-pass filtering in dependence on the control signal (Us), in order to limit the bandwidth thereof.

4. Method according to one of Claims 1 to 3, where the noise signal and the reference signal, before the comparison (9) of their amplitudes, are conducted via bandpass filters (8, 10) tuned to the colour subcarrier frequency.

5. Method according to one of Claims 1, 3 or 4, where a PLL circuit (15) for regenerating the colour subcarrier (17) is driven by the summation signal (13) of the input signal and centre tap signal of the two-line delay element.

6. Method according to one of Claims 1 to 5, in which the two-line delay element comprises the series circuit formed by two line delay lines (5, 6).

7. Method according to one of Claims 1 to 6, in which, if no component of the decoded helper signal serves for increasing the resolution, a vertical aperture correction (33) is switched on by means of the control signal (Us).

8. Method according to one of Claims 1 to 7, where the control signal (Us) comprises a hysteresis function.

## Revendications

1. Procédé de décodage (26, 30, 31) d'un signal de télévision couleur (CVBS) avec un signal d'aide permettant d'augmenter la résolution verticale, où, en fonction d'un certain niveau d'intensité (9 ; 27), une seule partie correspondante (11 ; 31) du signal d'aide décodé (28, 29) sert à l'augmentation de la résolution, **caractérisé en ce que** :
- le signal de télévision couleur est un signal de télévision couleur PALplus ;
- le signal de synchronisation de couleur (2), produit à partir du signal de télévision couleur, est acheminé à un élément de retard (5, 6) à deux lignes, sur un filtre-peigne, où l'amplitude d'une information parasite (N) est calculée à partir de la différence (4) entre le signal entrant et sortant de l'élément de retard à deux lignes et où l'amplitude du signal de référence (7) est calculée à partir de la somme (3) du signal entrant et sortant de l'élément de retard à deux lignes ;
- en comparant l'amplitude de l'information parasite et l'amplitude du signal de référence, un signal de commande (Us) est produit pour sélectionner la partie du signal d'aide à décoder.

2. Procédé conforme à la revendication 1, où le signal cumulé (3) du signal entrant et sortant de l'élément de retard à deux lignes (5, 6), commuté (19) à une fréquence de lignes ±45°, est additionné (22) au signal cumulé (13) du signal entrant et à prise médiane de l'élément de retard à deux lignes et constitue ainsi le signal de référence.

3. Procédé conforme à la revendication 1 ou 2, où le signal d'aide décodé est filtré passe-bas en fonction du signal de commande (Us), afin de réduire sa largeur de bande.

4. Procédé conforme à l'une des revendications 1 à 3, où l'information parasite et le signal de référence sont acheminés, avant d'effectuer la comparaison (9) de leurs amplitudes, sur des passe-bandes (8, 10) syntonisés à la fréquence de la sous-porteuse couleur.

5. Procédé conforme à l'une des revendications 1, 3 ou 4, où un circuit PLL (15) de régénération de la sous-porteuse couleur (17) est commandé par le signal cumulé (13) du signal entrant et à prise médiane de l'élément de retard à deux lignes.

6. Procédé conforme à l'une des revendications 1 à 5, où l'élément de retard à deux lignes se compose du montage en série des deux circuits à retard de lignes (5, 6).

7. Procédé conforme à l'une des revendications 1 à 6, où une correction d'ouverture (33) est mise en oeuvre à l'aide du signal de commande (Us), lorsque aucune partie du signal d'aide décodé ne sert à l'augmentation de la résolution.

8. Procédé conforme à l'une des revendications 1 à 7, où le signal de commande (Us) contient une fonction d'hystérésis.
